# EUROPÄISCHE PATENTSCHRIFT

(11) **EP 2 490 974 B1**
(45) Veröffentlichungstag und Bekanntmachung des Hinweises auf die Patenterteilung: **09.04.2014**
(21) Anmeldenummer: 10768881.4
(22) Anmeldetag: 19.10.2010
(51) Int. Cl.: F16B 23/00, B66C 1/66, E04G 21/14, F16C 11/06

(54) **ANSCHLAGMITTEL SOWIE LASTHEBESYSTEM FÜR DIE BENUTZUNG MIT EINEM SOLCHEN ANSCHLAGMITTEL**
MEANS OF ATTACHMENT AND LOAD LIFTING SYSTEM FOR USE WITH SUCH A MEANS OF ATTACHMENT
MOYEN D'AMARRAGE ET SYSTÈME DE LEVAGE DE CHARGE À UTILISER AVEC LEDIT MOYEN D'AMARRAGE

(30) Priorität: 20.10.2009 DE 102009050139
(43) Veröffentlichungstag der Anmeldung: 29.08.2012
(73) Patentinhaber: CARL STAHL GMBH, 73079 Süssen (DE)
(72) Erfinder: RUBE, Helmut, 73079 Süßen (DE)
(74) Vertreter: Bartels, Martin Erich Arthur
(86) Internationale Anmeldenummer: PCT/EP2010/006376
(87) Internationale Veröffentlichungsnummer: WO 2011/047830

(56) Entgegenhaltungen:
- DE-A1-102008 019 912
- FR-A1- 2 884 239
- GB-A- 2 261 651
- US-A- 2 755 105

## Beschreibung

Die Erfindung betrifft ein Anschlagmittel, das ein mit einer zu bewegenden Last verbindbares oder verbundenes Ankerteil und ein von der Last abgesetztes Anlageteil aufweist, wobei zwischen dem Ankerteil und dem Anlageteil ein Abstützteil angeordnet ist, das vom Anlageteil mit vorgegebenem Abstand über ein Halsteil getrennt ist und im an der Last festgelegten Zustand sich mit einer Festlegefläche an der Last abstützt, wobei das Anlageteil für den Angriff einer Trägerfläche an einem Trägergehäuse eines Lasthebemittels eine Übertragungsfläche aufweist, die zumindest teilweise konvex ausgebildete oder von einer konvex gekrümmten Einhüllenden umschriebene Flächenareale aufweist. Die Erfindung betrifft des weiteren ein Lasthebesystem für die Benutzung mit einem solchen Anschlagmittel.

Anschlagmittel verschiedenster Art sind grundsätzlich bekannt, vgl. das Dokument DE 102008019912 (A1) oder z. B. Dokument GB 2 261 651 A. Derartige Anschlagmittel werden bevorzugt bei Lasthebesystemen zur Handhabung schwergewichtiger platten- oder quaderförmiger Lasten benutzt, insbesondere von Betonfertigteilen. Ein Vorteil derartiger Anschlagmittel besteht darin, dass sich die Handhabung einfach und bequem gestaltet, weil die Verhakung für das Anhängen eines Lasthebemittels am Anschlagmittel durch Umgreifen des Anlageteiles durch eine Trägerfläche am Lasthebemittel erfolgt. Maßnahmen wie das Betätigen von Verschraubungen oder dergleichen entfallen. Somit lassen sich Verhakung und Enthakung auf ähnlich bequeme Weise bewerkstelligen, wie dies beim Anhängen oder Aushängen von Lasthaken von Kränen oder ähnlichen Hebezeugen an Anhängeösen der zu manipulierenden Lasten der Fall ist.

Ein weiterer Vorteil derartiger Anschlagmittel mit einem Anlageteil in der Art eines Sphäroides, beispielsweise in Form einer glatten Kugel oder Halbkugel, besteht darin, dass bei angehängtem Lasthebemittel eine freie Drehbarkeit des Trägergehäuses am Anlageteil in alle Richtungen innerhalb eines gewissen Winkelbereiches möglich ist. Somit kann ohne Schwierigkeiten unter einem gewissen Schrägzug gearbeitet werden. Schwierigkeiten ergeben sich jedoch in solchen Fällen, bei denen Winkelabweichungen der Zugrichtung gegenüber der Längsachse des Ankerteiles des Anschlagmittels ein bestimmtes Ausmaß überschreiten.

Um diesen Schwierigkeiten zu begegnen, ist ein entsprechend konzipiertes Anschlagmittel nebst Lasthebesystem in der EP 0 132 524 A2 bereits beschrieben worden. Das bekannte, gattungsgemäße Anschlagmittel weist ein Ankerteil auf, das wiederum einen mit einer zu bewegenden Last verbindbaren oder verbundenen Verankerungsschaft und ein von der Last abgesetztes Anlageteil aufweist, wobei zwischen dem Ankerteil und dem Anlageteil ein Abstützteil angeordnet ist, das vom Anlageteil mit vorgegebenem Abstand über ein Halsteil getrennt ist und im an der Last festgelegten Zustand sich mit einer Festlegefläche an der Last abstützt, wobei das Anlageteil für den Angriff einer Trägerfläche an einem Trägergehäuse des Lasthebemittels eine Übertragungsfläche aufweist, die zumindest teilweise konvex ausgebildete oder von einer konvex gekrümmten Einhüllenden umschriebene Flächenareale aufweist, wobei das Abstützteil an seiner der Festlegefläche entgegengesetzten, in Richtung des Halsteiles weisenden Oberseite eine Abstützfläche aufweist, auf die bei einem Schrägzug des Lasthebemittels, bei dem die Zugrichtung von der Längsachse des Ankerteiles um einen vorgegebenen Winkelbetrag abweicht, eine Wirkfläche des angreifenden Lasthebemittels eine Abstützkraft ausübt, die zumindest teilweise über die an der Außenseite der Last anliegende Festlegefläche des Abstützteiles in die Last eingeleitet wird, und wobei das Abstützteil des Anschlagmittels die Form eines eine radiale Erweiterung am Ende des Verankerungsschaftes bildenden Bundes besitzt, dessen an den Verankerungsschaft angrenzende Unterseite die eine Radialebene definierende Festlegefläche bildet.

Das bekannte Anschlagmittel ist als ein Schraub-Verbindungsstück ausgebildet, welches dazu dient, einen Hülsenanker, der in einem Betonfertigteil einbetoniert ist, mit dem Lasthebemittel zu verbinden. Die bekannte Abstützplatte weist auf ihrer Oberseite eine kalottenartige Vertiefung auf, die mittig ein schraubenkopfförmiges Anlageteil aufweist, das über ein Halsteil gegenüber dem Grund der kalottenartigen und insoweit konvexen Vertiefung des Abstützteiles abgesetzt ist. Teile des Anlageteiles sind bei der bekannten Lösung vertieft innerhalb der kalottenartigen Ausnehmung des Abstützteils aufgenommen.

Das aufzusetzende Lasthebemittel weist ein Trägergehäuse mit einer maulartigen Ausnehmung für das Anlage- sowie das Halsteil auf und diejenigen Bestandteile des Trägergehäuses, die der kalottenförmigen Ausnehmung des Abstützteils zugewandt sind, sind der Krümmung der Ausnehmung nachfolgend als konvex verlaufende Anlageflächen ausgebildet. Bei der bekannten Lösung ist das Lasthebemittel allseitig gegenüber dem Anschlagmittel drehbar angeordnet, so dass Kräfte aus allen auftretenden Kraftrichtungen aufgenommen werden können. Des weiteren kommt es im Schrägzugfall zu einer Anlage von konvexen Außenwandflächen des Lasthebemittels mit konkaven korrespondierenden Anlageflächen der Vertiefung im Abstützteil.

Da im genannten Schrägzugfall große Wandflächen von Trägergehäuse des Lasthebemittels mit konvexen Wandflächen des plattenartigen Abstützteils in Anlage sind, ist aufgrund der damit einhergehenden großflächigen Lastverteilung nur eine geringe Krafteinleitung im Bereich der Festlegefläche des Abstützteils mit der zu bewegenden Last erreicht. Insoweit ist eine besonders wirksame und effiziente Abstützung gegenüber der Last im Fall des Schrägzugs bei der bekannten Lösung nicht gegeben und aufgrund der vertieften Eingriffsanordnung zwischen Lasthebemittel und Anschlagmittel im Bereich der konkaven Vertiefung des Abstützteils ist die Handhabung für eine Bedienperson erschwert, insbesondere wenn die bekannte Lösung in Bereichen mit entsprechend auftretender Verschmutzung eingesetzt wird, wie dies häufig im Bereich der Schwerindustrie der Fall ist sowie bei Einsätzen im Off-Shore-Bereich oder im rauen Baubetrieb beim Erstellen von Gebäuden und dergleichen mehr.

Ausgehend von diesem Stand der Technik stellt sich die Erfindung die Aufgabe ein Anschlagmittel der betrachteten Art nebst einem Lasthebesystem derart weiter zu verbessern, dass auch bei hohem Verschmutzungsanfall ein sicherer, montagefreundlicher und wartungsfreier Betrieb gewährleistet ist und dass selbst bei extremem Schrägzug über das Lasthebesystem eine sichere Abstützung gegenüber der Last erfolgt.

Eine dahingehende Aufgabe erfüllt erfindungsgemäß ein Anschlagmittel mit den Merkmalen des Patentanspruches 1 in seiner Gesamtheit sowie ein Lasthebesystem mit den Merkmalen des Patentanspruches 6.

Nach dem kennzeichnenden Teil des Patentanspruches 1 besteht eine wesentliche Besonderheit der Erfindung darin, dass die Abstützfläche an der Oberseite des Bundes eine in den radial außenliegenden Randbereich des Bundes übergehende konvexe Wölbung besitzt oder eben verlaufend ausgestaltet ist, und dass das Halsteil in Richtung der Längsachse gesehen, derart von der Abstützfläche einen Überstand aufweist, dass an jeder Stelle des Anlageteiles dieses oberhalb der Abstützfläche angeordnet ist. Aufgrund der dahingehenden Anordnung kommt es bei einem Angriff des Lasthebesystems zu einer hohen Flächenpressung im Bereich der Abstützfläche an der Oberseite des ringartigen Bundes des Abstützteiles bei Schrägzug, die entsprechend an die Festlegefläche des Anschlagmittels und mithin an die zu handhabende Last weitergegeben wird, so dass insoweit eine entsprechende Entlastung des Gesamtlasthebesystems erreicht ist. Da die erfindungsgemäße Lösung vorsieht, dass das Anlageteil über das Halsteil einen vorgebbaren Überstand gegenüber der Oberseite der Abstützfläche und mithin des Abstützteils einhält, kann im Wesentlichen eine geschlossene Oberfläche für das Anschlagmittel realisiert werden, die entsprechend verschmutzungsunempfindlich ist. Da das Lasthebemittel im übrigen nicht, wie im Stand der Technik aufgezeigt, in eine Vertiefung des Abstützteils einzugreifen braucht, ist die Krafteinleitung insbesondere beim Schrägzug über das Anlageteil und das Halsteil in das Abstützteil entsprechend schonend, so dass sich auch mit entsprechend geometrisch klein aufbauenden Anschlagmitteln hohe Transport- oder Lastkräfte erreichen lassen.

Eine weitere Besonderheit besteht darin, dass das Abstützteil, das mit seiner Festlegefläche an der Last abgestützt ist, an seiner der Festlegefläche entgegengesetzten Oberseite die Abstützfläche aufweist, an der eine Wirkfläche des angreifenden Lasthebemittels in Fällen zur Anlage gelangt, bei denen die Zugrichtung von der Längsachse des Ankerteils um einen Winkelbetrag abweicht, der einen vorgegebenen Winkelbetrag übersteigt. Während bei "normalen" Zugrichtungen die kugelgelenkartige Drehbarkeit des Trägergehäuses um die kugelige Übertragungsfläche am Anlageteil des Anschlagmittels erhalten bleibt, kommt es bei einem extremen Schrägzug zu einer die Belastung des Halsteiles des Anschlagmittels vermindernden und damit die Sicherheit erhöhenden Abstützung des Trägergehäuses, wobei eine vom angreifenden Lasthebemittel aufgebrachte Abstützkraft über die an der Außenseite der Last anliegende Festlegefläche des Abstützteiles in die Last einleitbar ist.

Vorzugsweise weist das Ankerteil des Anschlagmittels einen mit der Last verbindbaren, vorzugsweise mit der Last verschraubbaren Verankerungsschaft auf. Alternativ könnte das Anschlagmittel ohne Verankerungsschaft mit einer gegebenenfalls metallischen Last verschweißt sein.

Bei besonders vorteilhaften Ausführungsbeispielen ist die Anordnung so getroffen, dass das Abstützteil des Anschlagmittels die Form eines eine radiale Erweiterung am Ende des Verankerungsschaftes bildenden Bundes besitzt, dessen an den Verankerungsschaft angrenzende Unterseite die eine Radialebene definierende Festlegefläche bildet. Eine derartige Gestaltung ermöglicht nicht nur eine wirksame Abstützung, weil die Festlegefläche an der Außenseite der Last von der Längsachse einen radialen Abstand haben kann, der dem gesamten Durchmesser des Bundes entspricht, sondern der Außenumfang des Bundes kann auch eine die Zusammenwirkung mit einem Drehwerkzeug ermöglichende Gestaltung, wie Außensechskant oder dergleichen, erhalten, so dass die Verschraubung des Anschlagmittels mit der Last auf einfache Weise ermöglicht ist.

Bei besonders bevorzugten Ausführungsbeispielen besitzt die Abstützfläche an der Oberseite des Bundes eine in den radial außenliegenden Randbereich des Bundes übergehende konvexe Wölbung, an die sich radial einwärts eine konkave Wölbung anschließt, die in die gleichsinnige Wölbung des Halsteiles übergeht. Dadurch ergibt sich eine besonders effektive Abstützwirkung an der Abstützfläche des Bundes.

In besonders vorteilhafter Weise kann hierbei die Anordnung so getroffen sein, dass die sich an die Abstützfläche anschließende konkave Wölbung in der Oberseite des Bundes eine axiale Vertiefung bildet, die sich zwischen dem Halsteil und dem demgegenüber hochstehenden, radial außenliegenden Randbereich befindet.

Gemäß dem Patentanspruch 6 ist Gegenstand der Erfindung auch ein Lasthebesystem für die Benutzung mit einem Anschlagmittel nach einem der Ansprüche 1 bis 5, wobei erfindungsgemäß vorgesehen ist, dass eine auf einer der Außenseiten des Trägergehäuses angeordnete Wirkfläche eben verlaufend ausgebildet ist, die eingriffsfrei von außen her in Anlage mit dem Abstützteil des Anschlagmittels für einen Lasthebevorgang bringbar ist. Auch insoweit kommt es beim Angriff des Lasthebemittels zu einer verbesserten Abstützung und Krafteinleitung bei Schrägzug über das Anschlagmittel in die zu handhabende Last.

Dabei kann das Trägergehäuse einen Aufnahmeraum aufweisen, der beim Zustand der Verhakung mit dem Anschlagmittel Teile des Anlageteiles und des Halsteiles umgibt.

Mit besonderem Vorteil kann die Anordnung hierbei so getroffen sein, dass das Trägergehäuse an Wandteilen des Aufnahmeraumes, die beim Verhakungszustand das Anlageteil des Anschlagmittels teilweise umgreifen, die Trägerfläche bildet und in einer Stirnwand eine Öffnung sowie in einem Bodenteil einen Schlitz für die Einführung des Anlageteiles und des Halsteiles freilässt, wobei an dem dem Bodenteil benachbarten Randbereich einer der Öffnung entgegengesetzten Rückwand des Trägergehäuses die für die Zusammenwirkung mit der Abstützfläche des Abstützteiles des Anschlagmittels vorgesehene Wirkfläche gebildet ist.

Die Anordnung kann mit besonderem Vorteil hierbei so getroffen sein, dass die die Wirkfläche aufweisende Rückwand des Trägergehäuses in bogenförmig gekrümmtem Verlauf einen Teil des aufgenommenen Anlageteiles umgibt und in einem den Schlitz des Bodenteiles des Trägergehäuses rückseitig begrenzenden Rand endet, der mit einer der Wölbung der Abstützfläche am Bund des Anlageteils angepassten Wölbung die Wirkfläche bildet. Hinsichtlich der Lagebeziehung zwischen Wirkfläche und Abstützfläche kann die Anordnung so getroffen sein, dass die Rückwand in einem Abstand vom Bodenteil des Trägergehäuses endet, bei dem sich die Wirkfläche bei in Richtung der Längsachse des Ankerteiles verlaufender Zugrichtung in einem Abstand von der Abstützfläche des Bundes befindet und bei einer in einem betreffenden Winkel zur Längsachse verlaufenden Zugrichtung an der Abstützfläche anliegt. Dadurch ist das Trägergehäuse des Lasthebemittels innerhalb eines Winkelbereiches, der "normalen" Zugrichtungen entspricht, ohne dass die Wirkfläche an der Abstützfläche des Bundes zur Anlage kommt, um das Anlageteil des Anschlagmittels frei schwenkbar, während bei Überschreiten des Winkelbereiches, also bei in größerem Winkel zur Längsachse des Ankerteiles verlaufender Zugrichtung, die gewünschte Abstützwirkung durch Anliegen der Wirkfläche an der Abstützfläche des Bundes zustande kommt.

Nachstehend ist die Erfindung anhand eines in der Zeichnung dargestellten Ausführungsbeispieles im Einzelnen erläutert. Es zeigen:
- Fig. 1: eine näherungsweise in natürlicher Größe einer praktischen Ausführungsform gezeichnete, perspektivische Schrägansicht des Anschlagmittels für ein Ausführungsbeispiel des erfindungsgemäßen Lasthebesystems;
- Fig. 2: eine hälftig im Längsschnitt gezeichnete Seitenansicht des Anschlagmittels von Fig. 2;
- Fig. 3: einen vergrößert gezeichneten Teilausschnitt des in Fig. 2 mit III bezeichneten Bezirks des Anschlagmittels;
- Fig. 4: eine Vorderansicht des Ausführungsbeispieles des Lasthebesystems im Zustand der Verhakung an einer schematisiert angedeuteten Last, wobei eine Zugrichtung entlang der Achse des Anschlagmittels dargestellt ist;
- Fig. 5: eine Schnittdarstellung entsprechend der Schnittlinie V-V von Fig. 4;
- Fig. 6: eine perspektivische Schrägansicht des Ausführungsbeispieles des Lasthebesystems im Zustand der Verhakung, wobei eine Zugrichtung entlang der Außenseite der Last dargestellt ist;
- Fig. 7: eine perspektivische Schrägansicht des Ausführungsbeispieles im Zustand der Verhakung mit dem gesondert dargestellten Anschlagmittel, wobei ebenfalls eine Zugrichtung dargestellt ist, die senkrecht zur Längsachse des Anschlagmittels verläuft;
- Fig. 8: eine Schnittdarstellung entsprechend der Schnittlinie VIII-VIII von Fig. 9, und
- Fig. 9: eine Draufsicht der Darstellung von Fig. 6.

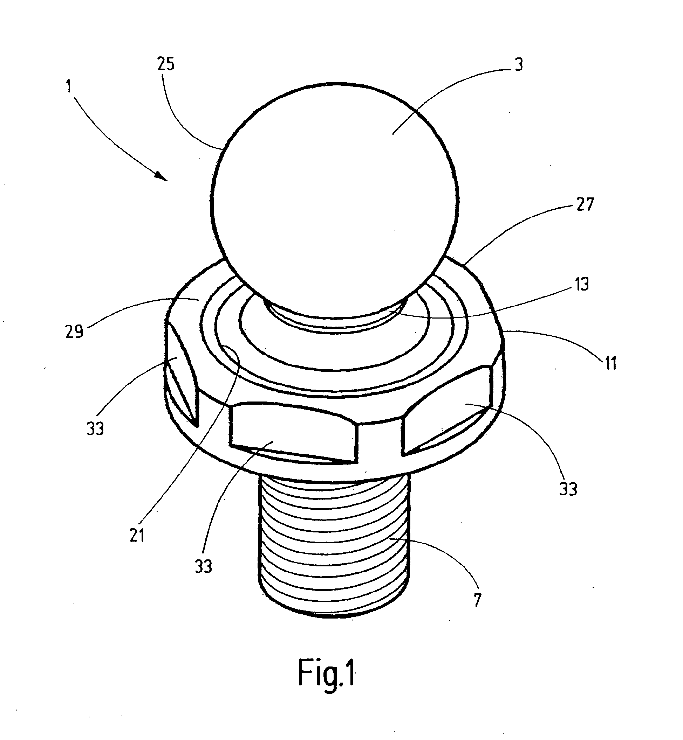

Das erfindungsgemäße Anschlagmittel, das als Ganzes mit 1 bezeichnet und in den Fig. 1 bis 3 gesondert dargestellt ist, hat die Form eines sogenannten Kugelkopfes mit einem für die Verhakung mit einem Lasthebemittel vorgesehenen Anlageteil 3 und einem Ankerteil 5, das einen mit Außengewinde versehenen Verankerungsschaft 7 bildet, der eine Längsachse 9 definiert. An dem dem Anlageteil 3 zugewandten Ende des Ankerteiles 5 schließt sich ein Abstützteil in Form eines den Verankerungsschaft 7 radial erweiternden Bundes 11 an, der wiederum vom Anlageteil 3 über ein Halsteil 13 getrennt ist, das zwischen dem Bund 11 und dem Anlageteil 3 eine Einschnürung mit einer konkaven Wölbung bildet, die sich an die konvexe Wölbung des kugelförmigen Anlageteiles 3 anschließt. Der Durchmesser der Kugelform des Anlageteiles 3 entspricht in etwa dem Eineinhalbfachen des Durchmessers des Verankerungsschaftes 7. Die durch das Halsteil 13 gebildete Einschnürung verringert den Durchmesser etwa auf denjenigen des Verankerungsschaftes 7. Der Außendurchmesser des Bundes 11 beträgt etwas mehr als das Doppelte des Verankerungsschaftes 7.

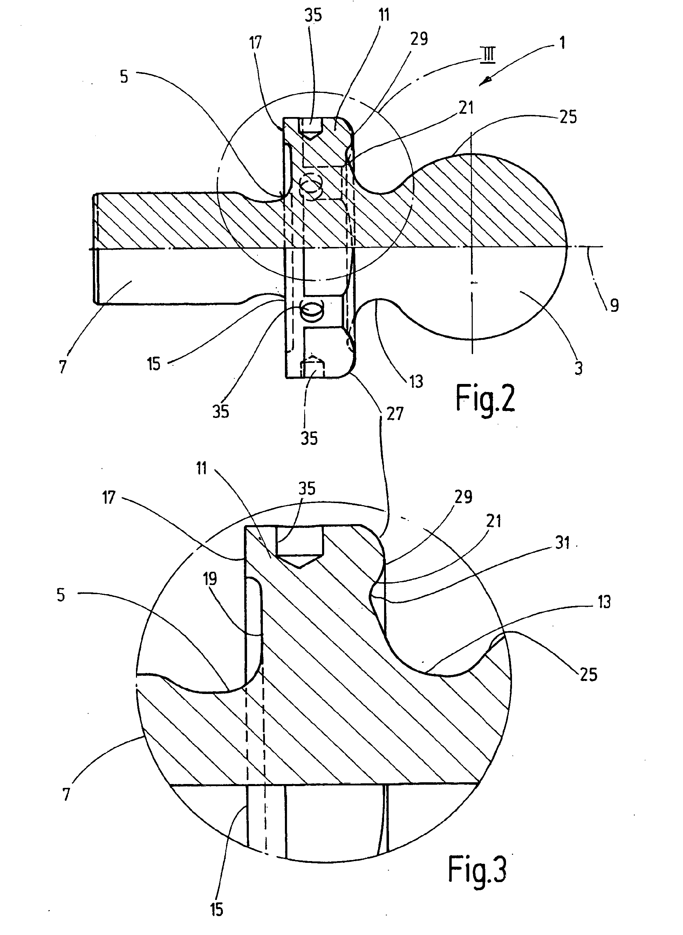

Die an den Verankerungsschaft 7 angrenzende Unterseite des Bundes 11 definiert eine zur Längsachse 9 senkrechte Radialebene 15 (Fig. 2 und 3), deren radial außenliegender Randbereich eine Festlegefläche 17 bildet, mit der der Bund 11 an der Außenseite der in Fig. 1 bis 3 nicht dargestellten Last 41 anliegt, wenn der Verankerungsschaft 7 in die Last 41 eingeschraubt und das Anschlagmittel 1 daher an der Last 41 festgelegt ist. Am radial innenliegenden Rand der Festlegefläche 17 bildet die Unterseite des Bundes 11 eine leichte Vertiefung 19, so dass die Festlegefläche 17 in Form eines ebenen Ringrandes an der Unterseite des Bundes 11 vorsteht.

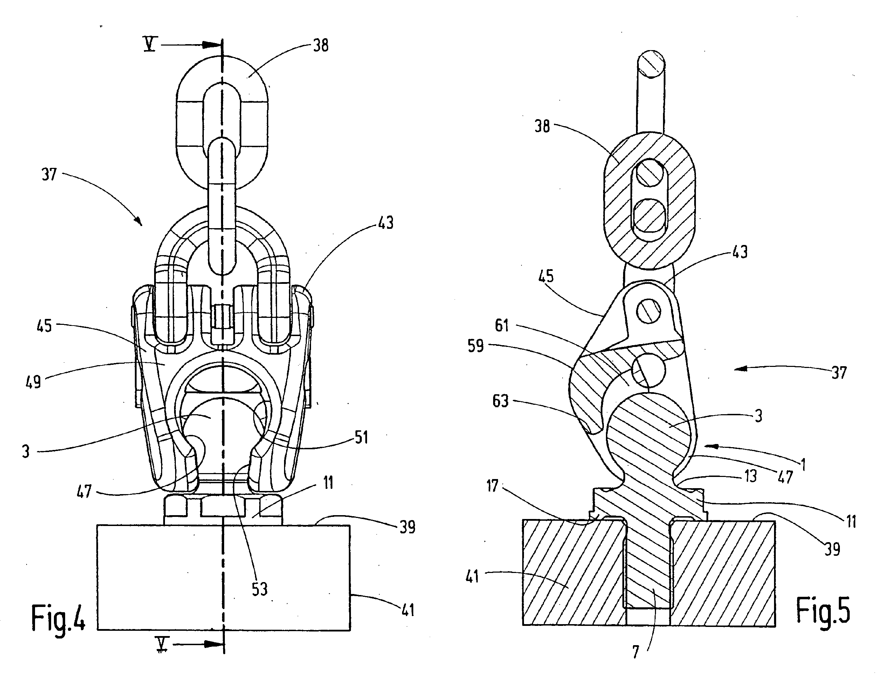

Wie die Fig. 2 und 3 am deutlichsten zeigen, weisen die dem Anlageteil 3 zugewandte Oberseite des Bundes 11 sowie das angrenzende Halsteil 13 eine spezielle Formgebung auf, um in Zusammenwirkung mit einem Lasthebemittel 37 (Fig. 4 bis 9) eine Abstützwirkung zwischen einer Wirkfläche 63 des Lasthebemittels 37 und dem Bund 11 des Anschlagmittels 1 zu bilden. Hierfür weist der Bund 11 an seiner Oberseite eine Abstützfläche 29 auf, deren Formgebung am deutlichsten aus Fig. 3 ersichtlich ist. Die Abstützfläche 29 weist eine konvexe Wölbung auf, die sich an die konkave Wölbung des Halsteiles 13 anschließt, die wiederum in die konvexe Wölbung der kugeligen Übertragungsfläche 25 des Anlageteiles 3 übergeht. Am radial außenliegenden Bereich bildet die Abstützfläche 29 einen konvex gewölbten Randbereich 27, so dass die Abstützfläche 29 in der Oberseite des Bundes 11 in eine axiale Vertiefung 31 (Fig. 3) übergeht, an die sich radial nach außen der gegenüber der Vertiefung 31 hochstehende Randbereich 27 anschließt.

Vervollständigt wird die Formgebung des Bundes 11 durch am Außenumfang befindliche Gestaltungen für die Zusammenwirkung mit zur Verschraubung dienenden Drehwerkzeugen, wie Abflachungen 33 zur Bildung eines Außenmehrkants oder Sackbohrungen 35 für Stiftschlüssel.

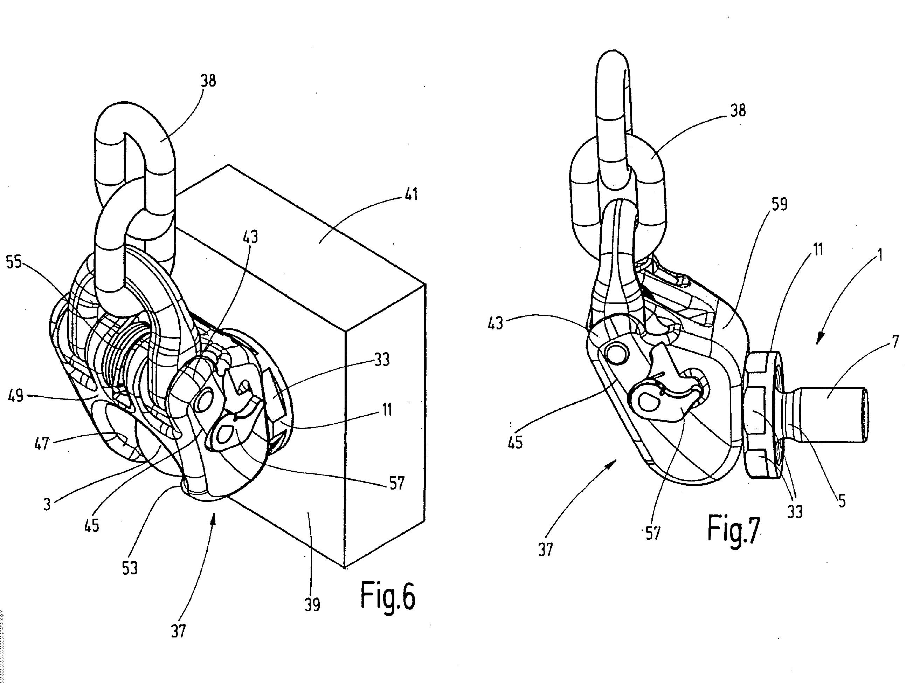

Die Fig. 4 bis 9 zeigen das Lasthebesystem in einem Betriebszustand, bei dem das zugehörige Lasthebemittel 37 mit dem Anschlagmittel 1 verhakt ist und wobei über eine Zugkette 38 vom nicht gezeigten Hebegerät (Kran oder dergleichen) eine Hebekraft wirksam ist, die bei der Darstellung der Fig. 6 bis 9 am Anschlagmittel 1 mit senkrecht zur Längsachse 9 verlaufender Zugrichtung angreift, es sich also um einen Schrägzug handelt, bei dem die Zugrichtung parallel entlang der Außenseite 39 der lediglich schematisiert angedeuteten Last 41 gerichtet ist. Im Gegensatz hierzu verläuft die Zugrichtung bei den Fig. 4 und 5 in Richtung der Längsachse.

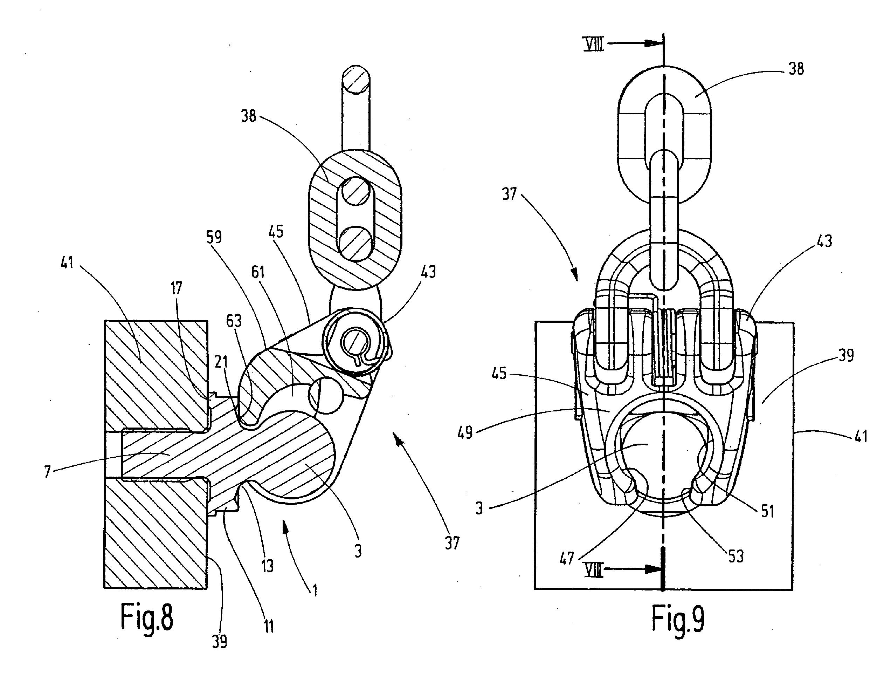

Das Lasthebemittel 37 weist ein an seiner Oberseite 43 an die Kette 38 angehängtes Trägergehäuse 45 auf, in dem das Anlageteil 3 und das Halsteil 13 des Anschlagmittels 1 aufnehmbar sind und das in der Art eines sogenannten Kugelträgers innenseitig konkav gewölbte Flächenteile aufweist, die eine Trägerfläche 47 (Fig. 4 und 9) für die Zusammenwirkung mit der Übertragungsfläche 25 am Anlageteil 3 des Anschlagmittels 1 bilden. Das Trägergehäuse 45 weist in einer Stirnwand 49 eine Öffnung 51 sowie in einem Bodenteil einen Schlitz 53 für die Einführung des Anlageteiles 3 und des Halsteiles 13 auf. Um einen unbeabsichtigten Austritt des Anlageteiles 3 durch die Öffnung 51 zu verhindern ist eine in den Fig. nicht eingezeichnete Sicherung vorgesehen, die mittels einer seitlichen Handhabe 57 in die Freigabestellung steuerbar ist.

Wie aus Fig. 5 und 8 deutlich entnehmbar ist, umgibt die Rückwand 59 des Kugelträgergehäuses 45 den inneren Aufnahmeraum 61 in gewölbtem Verlauf, wobei das untere, freie Ende der Rückwand 59 in einem Abstand vom Bodenteil des Kugelträgergehäuses 45 endet. Dieser Abstand ist so gewählt, dass bei Zugrichtungen, die von der Richtung der Längsachse 9 des Verankerungsschaftes 7 des Anschlagmittels 1 nicht um einen großen Winkel abweichen (Fig. 4 und 5), das Kugelträgergehäuse 45 um das Anlageteil 3 des Anschlagmittels 1 kugelartig schwenkbar ist. Im Falle eines Schrägzuges, der einen betreffenden Winkelbereich überschreitet, insbesondere bei einem Schrägzug, wie er in den Fig. 6 bis 9 mit senkrecht zur Längsachse 9 verlaufender Zugrichtung dargestellt ist, gelangt die Rückwand 59 des Kugelträgergehäuses 45 mit ihrem Endrand, der eine Wirkfläche 63 bildet, in die in Fig. 8 dargestellte Abstützposition an der Abstützfläche 29 des Bundes 11. Während bei einem Schrägzug, der ohne die in Fig. 8 gezeigte Abstützposition der Wirkfläche 63 an der Abstützfläche 29 erfolgen würde, die gesamte Zugkraft der Kette 38, da sie ausschließlich am Anlageteil 3 des Anschlagmittels 1 zur Wirkung kommen würde, ein entsprechendes Biegemoment am eingeschnürten Halsteil 13 erzeugt, führt die bei der Erfindung vorgesehene Abstützung der Wirkfläche 63 der Rückwand 59 am Bund 11 zu einer beträchtlichen Verringerung des Biegemomentes am Halsteil 13, weil eine Kraftkomponente als Teil der Zugkraft der Kette 38 über die Wirkfläche 63 der Gehäuserückwand 59 als Druckkraft an der Abstützfläche 29 auf die Oberseite des Bundes 11 übertragen wird und vom Bund 11 über die an der Unterseite befindliche Festlegefläche 17 in radialem Abstand von der Längsachse 9 des Verankerungsschaftes 7 in die Last 41 eingeleitet wird. Bei der Erfindung ist daher die strukturelle Belastung des Anschlagmittels 1 sowohl in dem eingeschnürten Halsteil 13 als auch im gesamten Ankerteil 5 bei Arbeiten mit starkem Schrägzug wesentlich verringert.

Dadurch, dass die Oberseite des Bundes 11 eine Abstützfläche 29 mit speziell gewölbter Formgebung besitzt, bildet die Oberseite des Bundes 11 wie in den Fig. 1 bis 3 deutlich ersichtbar ist, zwischen dem gewölbten Endabschnitt der Abstützfläche 29 und dem Halsteil 13 eine axiale Vertiefung 31, die radial nach außen vom hochstehenden Rand 27 begrenzt ist, so dass die Einleitung der Abstützkraft in Form einer axial wirkenden Kraftkomponente in den Bund 11 begünstigt wird.

## Patentansprüche

1. Anschlagmittel (1) mit einem Ankerteil (5), das einen mit einer zu bewegenden Last (41) verbindbaren oder verbundenen Verankerungsschaft (7) und ein von der Last (41) abgesetztes Anlageteil (3) aufweist, wobei zwischen dem Ankerteil (5) und dem Anlageteil (3) ein Abstützteil (11) angeordnet ist, das vom Anlageteil (3) mit vorgegebenem Abstand über ein Halsteil (13) getrennt ist und im an der Last (41) festgelegten Zustand sich mit einer Festlegefläche (17) an der Last (41) abstützt, wobei das Anlageteil (3) für den Angriff einer Trägerfläche (47) an einem Trägergehäuse (45) des Lasthebemittels (37) eine Übertragungsfläche (25) aufweist, die zumindest teilweise konvex ausgebildete oder von einer konvex gekrümmten Einhüllenden umschriebene Flächenareale aufweist, wobei das Abstützteil (11) an seiner der Festlegefläche (17) entgegengesetzten, in Richtung des Halsteiles (13) weisenden Oberseite eine Abstützfläche (29) aufweist, auf die bei einem Schrägzug des Lasthebemittels (37), bei dem die Zugrichtung von der Längsachse (9) des Ankerteiles (5) um einen vorgegebenen Winkelbetrag abweicht, eine Wirkfläche (63) des angreifenden Lasthebemittels (37) eine Abstützkraft ausübt, die zumindest teilweise über die an der Außenseite der Last (41) anliegende Festlegefläche (17) des Abstützteiles (11) in die Last (41) eingeleitet wird, und wobei das Abstützteil (11) des Anschlagmittels (1) die Form eines eine radiale Erweiterung am Ende des Verankerungsschaftes (7) bildenden Bundes besitzt, dessen an den Verankerungsschaft (7) angrenzende Unterseite die eine Radialebene definierende Festlegefläche (17) bildet, **dadurch gekennzeichnet, dass** die Abstützfläche (29) an der Oberseite des Bundes eine in den radial außenliegenden Randbereich (27) des Bundes übergehende konvexe Wölbung besitzt oder eben verlaufend ausgestaltet ist, und dass das Halsteil (13) in Richtung der Längsachse (9) gesehen, derart von der Abstützfläche (29) einen Überstand aufweist, dass an jeder Stelle des Anlageteils (3) dieses oberhalb der Abstützfläche (29) angeordnet ist.

2. Anschlagmittel nach Anspruch 1, **dadurch gekennzeichnet, dass** das Ankerteil (5) einen mit der Last (41) verbindbaren, vorzugsweise mit der Last (41) verschraubbaren Verankerungsschaft (7) aufweist.

3. Anschlagmittel nach Anspruch 1 oder 2, **dadurch gekennzeichnet, dass**, sofern die Abstützfläche (29) eine konvexe Wölbung besitzt, an diese sich radial einwärts eine konkave Wölbung (21) im Abstützteil (11) anschließt.

4. Anschlagmittel nach einem der vorhergehenden Ansprüche, **dadurch gekennzeichnet, dass** die konkave Wölbung (21) in eine gleichsinnige Wölbung des Halsteils (12), vorzugsweise absatzfrei, übergeht.

5. Anschlagmittel nach einem der vorhergehenden Ansprüche, **dadurch gekennzeichnet, dass** die sich an die Abstützfläche (29) anschließende konkave Wölbung (21) in der Oberseite des Bundes eine eine axiale, rillenartige Vertiefung (31) bildet, die sich zwischen dem Halsteil (13) und dem demgegenüber hochstehenden, radial außenliegenden Randbereich (27) des Abstützteiles (11) befindet.

6. Lasthebesystem für die Benutzung mit einem Anschlagmittel nach einem der vorstehenden Ansprüche, wobei das Lasthebemittel (37) ein Trägergehäuse (45) aufweist, in dem das Anlageteil (3) und ein an dieses angrenzender Teil des Halsteiles (13) des Anschlagmittels (1) aufnehmbar sind und das innenseitig konkav gewölbte Flächenteile aufweist, die die Trägerfläche (47) für die Zusammenwirkung mit der Übertragungsfläche (25) am Anlageteil (3) des Anschlagmittels (1) bilden, **dadurch gekennzeichnet, dass** eine auf einer der Außenseiten des Trägergehäuses (45) angeordnete Wirkfläche (63) eben verlaufend ausgebildet ist, die eingriffsfrei von außen her in Anlage mit dem Abstützteil (11) des Anschlagmittels (1) bringbar ist.

7. Lasthebesystem nach Anspruch 6, **dadurch gekennzeichnet, dass** das Trägergehäuse (45) einen Aufnahmeraum (61) aufweist, der beim Zustand der Verhakung mit dem Anschlagmittel (1) Teile des Anlageteiles (3) und des Halsteiles (13) umgibt.

8. Lasthebesystem nach Anspruch 7, **dadurch gekennzeichnet, dass** das Trägergehäuse (45) an Wandteilen des Aufnahmeraumes (61), die beim Verhakungszustand das Anlageteil (3) des Anschlagmittels (1) teilweise umgreifen, die Trägerfläche (47) bildet und in einer Stirnwand eine Öffnung (51) sowie in einem Bodenteil einen Schlitz (53) für die Einführung des Anlageteiles (3) und des Halsteiles (13) freilässt, und dass an dem dem Bodenteil benachbarten Randbereich einer der Öffnung (51) entgegengesetzten Rückwand (59) des Trägergehäuses (45) die für die Zusammenwirkung mit der Abstützfläche (29) des Abstützteiles (11) des Anschlagmittels (1) vorgesehene Wirkfläche (63) gebildet ist.

9. Lasthebesystem nach Anspruch 8, **dadurch gekennzeichnet, dass** die die Wirkfläche (63) aufweisende Rückwand (59) des Trägergehäuses (45) in bogenförmig gekrümmtem Verlauf einen Teil des aufgenommenen Anlageteiles (3) umgibt und in einem den Schlitz (53) des Bodenteiles des Trägergehäuses (45) rückseitig begrenzenden Rand endet, der mit einer der Wölbung der Abstützfläche (29) am Bund (11) des Anlageteils (3) angepassten Wölbung die Wirkfläche (63) bildet.

10. Lasthebesystem nach Anspruch 9, **dadurch gekennzeichnet, dass** die Rückwand (59) in einem Abstand vom Bodenteil des Trägergehäuses (45) endet, bei dem sich die Wirkfläche (63) bei in Richtung der Längsachse (9) des Ankerteiles (5) verlaufender Zugrichtung in einem Abstand von der Abstützfläche (29) des Bundes (11) befindet und bei einer in einem betreffenden Winkel zur Längsachse (9) verlaufenden Zugrichtung an der Abstützfläche (29) anliegt.

## Claims

1. An attachment means (1) that has an anchor part (5) connectable or connected to a load (41) to be moved and a contact part (3) offset from the load (41), a support part (11) being disposed between the anchor part (5) and the contact part (3) that is separated from the contact part (3) by a predetermined distance by a neck part (13) and in the state secured to the load (41) is supported on the load (41) by a securing surface (17), the contact part (3) having a transmission surface (25) for engaging a carrier surface (47) on a carrier housing (45) of the load lifting means (37), which transmission surface has at least partially convexly formed surface areas or surface areas defined by a convexly curved contour, the support part (11) having on its upper side opposite the securing surface (17) and pointing in the direction of the neck part (13) a support surface (29) .on which, with diagonal pull of the load lifting means (37) with which the direction of pull from the longitudinal axis (9) of the anchor part (5) deviates by a predetermined angular amount, an active surface (63) of the engaging load lifting means (37) exerts a supporting force which is introduced at least partially into the load (41) via the securing surface (17) of the support part (11) resting against the outside of the load (41), and the support part (11) of the attachment means (1) being in the form of a collar forming a radial extension at the end of the anchoring shaft (7) the lower side of which adjacent to the anchoring shaft (7) forms the securing surface (17) defining a radial plane, **characterised in that** on the upper side of the collar the support surface (29) has a convex curvature passing into the edge region (27) of the collar lying on the outside radially or is configured extending level, and that the neck part (13), as viewed in the direction of the longitudinal axis (9), has a projection from the support surface (29) such that at every point of the contact part (3) this neck part is disposed above the support surface (29).

2. The attachment means according to Claim 1, **characterised in that** the anchor part (5) has an anchoring shaft (7) connectable to the load (41), preferably that can be screwed to the load (41).

3. The attachment means according to Claim 1 or 2, **characterised in that** if the support surface (29) has a convex curvature, a concave curvature (21) in the support part (11) adjoins said support surface radially inwardly.

4. The attachment means according to any of the preceding claims, **characterised in that** the concave curvature (21) passes into a curvature in the same direction of the neck part (12), preferably without any offset.

5. The attachment means according to any of the preceding claims, **characterised in that** the concave curvature (21) adjoining the support surface (29) forms in the upper side of the collar an axial, groove-like indentation (31) which is located between the neck part (13) and the protruding edge region (27) of the support part (11) lying radially on the outside.

6. A load lifting system for use with an attachment means according to any of the preceding claims, the loading lifting means (37) having a carrier housing (45) in which the contact part (3) and a part of the neck part (13) of the attachment means (1) adjacent to said contact part can be received, and that has concavely curved surface parts on the inside which form the carrier surface (47) for co-operation with the transmission surface (25) on the contact part (3) of the attachment means (1), **characterised in that** an active surface (63) disposed on one of the outsides of the carrier housing (45) is formed to extend level and can be brought from the outside into contact, without engaging, with the support part (11) of the attachment means (1).

7. The load lifting system according to Claim 6, **characterised in that** the carrier housing (45) has a receiving space (61) which in the state of hooking with the attachment means (1) surrounds parts of the contact part (3) and the neck part (13).

8. The loading lifting system according to Claim 7, **characterised in that** on wall parts of the receiving space (61) which partially surround the contact part (3) of the attachment means (1) in the hooking state, the carrier housing (45) forms the carrier surface (47) and in a face wall leaves clear an opening (51) and in a base part a slot (53) for introducing the contact part (3) and the neck part (13), and that on the edge region of a rear wall (59) of the carrier housing (45) opposite the opening (51) adjacent to the base part, the active surface (63) provided for co-operation with the support surface (29) of the support part (11) of the attachment means (1) is formed.

9. The load lifting system according to Claim 8, **characterised in that** the rear wall (59) of the carrier housing (45) having the active surface (63) surrounds part of the contact part (3) received in the arcuately curved extension and ends in an edge delimiting the slot (53) of the base part of the carrier housing (45) on the rear side, which edge forms the active surface (63) with a curvature adapted to the curvature of the support surface (29) on the collar (11) of the contact part (3).

10. The load lifting system according to Claim 9, **characterised in that** the rear wall (59) ends a distance away from the base part of the carrier housing (45), the active surface (63) in the direction of pull running in the direction of the longitudinal axis (9) of the anchor part (5) being a distance away from the support surface (29) of the collar (11) and in a direction of pull running at a respective angle to the longitudinal axis (9) resting against the support surface (29).

## Revendications

1. Moyen (1) d'élingage comprenant une partie (5), qui forme ancre et qui a un fût (7) d'ancrage relié à une charge (41) déplacée ou pouvant l'être, et une partie (3) d'application à distance de la charge (41), dans lequel entre la partie (5) formant ancre et la partie (3) d'application est disposée une partie (11) d'appui, qui est séparée de la partie (3) d'application d'une distance prescrite par une partie (13) formant col et qui, dans l'état fixé à la charge (41), s'appuie sur la charge (41) par une surface (17) de fixation, la partie (3) d'application ayant pour l'attaque d'une surface (47) de support sur un carter (45) de support du moyen (37) de levage de la charge, une surface (25) de transition, qui a des superficies de surface au moins en partie convexes ou circonscrites par une enveloppe convexe, la partie (11) d'appui ayant, du côté supérieur opposé à la surface (17) de fixation et tourné en direction de la partie (13) formant col, une surface (29) d'appui sur laquelle, lors d'une traction en oblique du moyen (37) de levage de la charge pour laquelle la direction de la traction s'écarte de l'axe (9) longitudinal de la partie (5) formant ancre d'un montant angulaire prescrit, une surface (63) active du moyen (37) de levage de charge attaquant applique une force d'appui, qui est appliquée à la charge (41) au moins en partie par la surface (17) de fixation de la partie (11) d'appui, s'appliquant au côté extérieur de la charge (41) et dans lequel la partie (11) d'appui du moyen (1) d'élingage possède la forme d'un collet qui forme un élargissement radial à l'extrémité du fût (7) d'ancrage et dont le côté inférieur, voisin du fût (7) d'ancrage, forme la surface (17) de fixation définissant un plan radial, **caractérisé en ce que** la surface (29) d'appui a, du côté supérieur du collet, une courbure convexe se transformant en la partie (27) marginale à l'extérieure radialement du collet ou est conformée en s'étendant de manière plane, et **en ce que** la partie (13) formant col a, considéré dans la direction de l'axe (9) longitudinal, un dépassement de la surface (29) d'appui de manière **en ce qu'**en tout point de la partie (3) d'application, celle-ci soit disposée au-dessus de la surface (29) d'appui.

2. Moyen d'élingage suivant la revendication 1, **caractérisé en ce que** la partie (5) formant ancre a un fût (7) d'ancrage, qui peut être relié à la charge (41), en pouvant, de préférence, être vissé à la charge (41) .

3. Moyen d'élingage suivant la revendication 1 ou 2, **caractérisé en ce que**, dans la mesure où la surface (29) d'appui a une courbure convexe, une courbure (21) concave de la partie (11) d'appui se raccorde radialement à celle-ci vers l'intérieur.

4. Moyen d'élingage suivant l'une des revendications précédentes, **caractérisé en ce que** la courbure (21) concave se transforme en une courbure de même sens de la partie (12) formant col, de préférence sans retrait.

5. Moyen d'élingage suivant l'une des revendications précédentes, **caractérisé en ce que** la courbure (21) concave se raccordant à la surface (29) d'appui, forme dans le côté supérieur du collet, une cavité (31) axiale de type en rainure, qui se trouve entre la partie (13) formant col et la partie (27) marginale de la partie (11) d'appui à l'extérieur radialement et plus haute que la partie (13) formant col.

6. Système de levage de charges à utiliser avec un moyen d'élingage suivant l'une des revendications précédentes, dans lequel le moyen (37) de levage de charges a un carter (45) de support, dans lequel la partie (3) d'application et une partie qui en est voisine de la partie (13) formant col du moyen (1) d'élingage peuvent être reçues et qui a des parties de surface concaves du côté intérieur qui forment la surface (47) de support pour là coopération avec la surface (25) de transmission sur la partie (3) d'application du moyen (1) d'élingage, **caractérisé en ce qu'**une surface (63) active disposée sur l'un des côtés extérieurs du carter (45) de support s'étend en étant plane et peut être mise sans pénétration de l'extérieur en contact avec la partie (11) d'appui du moyen (1) d'élingage.

7. Système de levage de charges suivant la revendication 6, **caractérisé en ce que** le carter (45) de support a un espace (61) de réception qui, dans l'état de l'accrochage avec le moyen (1) d'élingage, entoure des parties de la partie (3) d'application et de la partie (13) formant col.

8. Système de levage de charges suivant la revendication 7, **caractérisé en ce que** le carter (45) de support forme, sur des parties de paroi de l'espace (61) de réception qui entoure en partie à l'état d'accrochage la partie (3) d'application du moyen (1) d'élingage, la surface (17) de support et dégage dans une paroi frontale une ouverture (51) ainsi que, dans une partie de fond, une forme (53) d'introduction de la partie (3) d'application et de la partie (13) formant col et **en ce que**, sur la zone de bord voisine de la partie du fond, une paroi (59) arrière, opposée à l'ouverture (51), du carter (45) de support, est formée la surface (63) active prévue pour la coopération avec la surface (29) d'appui de la partie (11) d'appui du moyen (1) d'élingage.

9. Système de levage de charges suivant la revendication 8, **caractérisé en ce que** la paroi (59) arrière, ayant la surface (63) active, du carter (45) de support, entoure suivant un tracé courbé en arc une partie de la partie (3) d'application qui est reçue et se termine dans un bord délimitant, du côté arrière, la fente (53) de la partie de fond du carter (45) de support, bord qui forme la surface (63) active par une courbure adaptée à la courbure de la surface (29) d'appui du collet (11) de la partie (3) d'application.

10. Système de levage de charges suivant la revendication 9, **caractérisé en ce que** la paroi (59) arrière se termine à distance de la partie de fond du carter (45) de support, la surface (63) active se trouvant à distance de la surface (29) d'appui du collet (11) pour une direction de traction s'étendant dans la direction de l'axe (9) longitudinal de la partie (5) formant ancre et s'appliquant à la surface (29) d'appui pour une direction de traction s'étendant en faisant un angle avec l'axe (9) longitudinale.
